# EUROPEAN PATENT APPLICATION

(11) **EP 4 851 664 A1**
(43) Date of publication of application: **09.12.2026**
(21) Application number: 25747810.7
(22) Date of filing: 24.01.2025
(51) Int. Cl.: G01S 7/487, G01S 17/89

(54) **METHOD FOR PROCESSING MULTIPLE PIECES OF ECHO DATA, DEVICE AND COMPUTER PROGRAM PRODUCT**

(30) Priority: 31.01.2024 CN 202410142027
(71) Applicant: Sony (China) Limited, Beijing 100027 (CN); Sony Group Corporation, Tokyo 108-0075 (JP)
(72) Inventor: IGARASHI, Go, Shenzhen, Guangdong 518031 (CN); SHEN, Linghao, Shenzhen, Guangdong 518031 (CN); LI, Kangning, Shenzhen, Guangdong 518031 (CN)
(74) Representative: D Young & Co LLP
(86) International application number: PCT/CN2025/074607
(87) International publication number: WO 2025/162242

(57) **Abstract**

A method for processing multiple pieces of echo data, a device, and a computer program product, for processing multiple pieces of echo data generated by a light detection and ranging device. The method (300) comprises: for each pixel point in a depth map of an environment generated by a light detection and ranging device, obtaining a plurality of pieces of echo data (310); determining the probability that particular echo data among the plurality of pieces of echo data corresponds to an effective echo or a noise echo, thereby forming a confidence map corresponding to the depth map (320); and on the basis of the confidence map, generating a saliency map corresponding to the depth map (330), wherein the saliency map is used for indicating the amount of effective information in a corresponding part of the depth map of the environment.

## Description

### TECHNICAL FIELD

The present disclosure generally relates to multi-echo data processing, including techniques for processing multi-echo data generated by a light detection and ranging device.

### BACKGROUND

A light detection and ranging device is a device for detecting and locating objects, and its working process includes emitting light through a transmitter and receiving, through a receiver, light that is reflected back after striking a target object. A distance to the target object is measured based on a time difference between light emission and reception (that is, time of flight, ToF). The receiver records the number of photons received at different times, and the recorded data is referred to as echo data. After light is reflected by an object, an echo is formed in the echo data, and the distance to the target object can be determined based on a position of the echo. The light detection and ranging device can also present three-dimensional (3D) structural information of the target object by analyzing information such as the magnitude of reflected energy on the surface of the target object, and the amplitude, frequency, and phase of the reflected spectrum.

In the case where the light source is a laser, the light detection and ranging device acts as a Light Detection and Ranging (LiDAR) device.

Multi-echo data corresponding to a single pixel point can be obtained through the light detection and ranging device such as LiDAR. In applications such as distance measurement of target objects and three-dimensional structure construction, it is desired to effectively and efficiently utilize the multi-echo data.

### SUMMARY

A first aspect of the present disclosure relates to a method for processing multi-echo data. According to an embodiment, the method includes: obtaining a plurality of echo data, for each pixel point in a depth map of an environment generated by a light detection and ranging device; determining a probability of respective echo data among the plurality of echo data corresponding to a valid echo or a noise echo, thereby forming a confidence map corresponding to the depth map of the environment; and generating a saliency map corresponding to the depth map of the environment based on the confidence map, where the saliency map is used to indicate an amount of valid information in respective portions of the depth map of the environment. The first aspect of the present disclosure further relates to a light detection and ranging device for performing the method.

A second aspect of the present disclosure relates to a method for training a neural network model. According to an embodiment, the method includes: obtaining a set of data samples, where the set of data samples includes a plurality of echo data for each pixel point in depth maps generated by a plurality of light detection and ranging devices; for each pixel point, adding a label of a valid echo or a noise echo to respective data samples by using a pixel point-specific noise probability model; and training the neural network model by using the set of data samples and respective labels as training data. The second aspect of the present disclosure further relates to an electronic device for performing the method.

A third aspect of the present disclosure relates to a method for establishing a noise probability model. According to an embodiment, the method includes: obtaining a set of data samples, where the set of data samples includes a plurality of echo data for a first pixel point in depth maps generated by a plurality of light detection and ranging devices; and determining parameters of a noise probability model specific to the first pixel point, based on the plurality of echo data for the first pixel point. The third aspect of the present disclosure further relates to an electronic device for performing the method.

The present disclosure further relates to a computer program product including one or more instructions. When executed by a processor, the one or more instructions cause implementation of various methods according to embodiments of the present disclosure. For example, the methods include a method for processing echo data, a method for training a neural network model, and a method for establishing a noise probability model.

The above summary is provided to summarize some exemplary embodiments in order to provide a basic understanding of the various aspects of the subject matter described herein. Therefore, the above-described features are merely examples and should not be construed as narrowing the scope or spirit of the subject matter described herein in any way. Other features, aspects, and advantages of the subject matter described herein will become apparent from the Detailed Description described below in conjunction with the drawings.

### BRIEF DESCRIPTION OF DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure, where:
FIG. 1 illustrates an example of a light detection and ranging device according to an embodiment of the present disclosure.
FIG. 2A illustrates a schematic diagram of an application scenario for light detection and ranging according to an embodiment of the present disclosure.
FIG. 2B illustrates a schematic diagram of echo data obtained in the application scenario of FIG. 2A according to an embodiment of the present disclosure.
FIG. 3 illustrates an example method for processing multi-echo data according to an embodiment of the present disclosure.
FIG. 4A and FIG. 4B illustrate examples of confidence maps corresponding to a depth map of an environment according to an embodiment of the present disclosure.
FIG. 4C illustrates an example of a saliency map corresponding to a depth map of an environment according to an embodiment of the present disclosure.
FIG. 5 illustrates an example method for training a neural network model according to an embodiment of the present disclosure.
FIG. 6 illustrates an example of a neural network model according to an embodiment of the present disclosure.
FIG. 7 illustrates an example of a convolutional neural network model according to an embodiment of the present disclosure.
FIG. 8 illustrates an example of a simulation model for light detection and ranging according to an embodiment of the present disclosure.
FIG. 9 illustrates an example method for establishing a noise probability model according to an embodiment of the present disclosure.
FIG. 10 illustrates an example of a noise probability model according to an embodiment of the present disclosure.
FIG. 11 illustrates an example block diagram of an electronic device for implementing various methods according to embodiments of the present disclosure.

Although the embodiments described in the present disclosure may have various modifications and alternatives, specific embodiments thereof are illustrated as examples in the accompanying drawings and described in detail in this specification. It should be understood that the drawings and detailed description thereof are not intended to limit embodiments to the specific forms disclosed, but to cover all modifications, equivalents, and alternatives falling within the spirit and scope of the claims.

### DETAILED DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

### Example of a light detection and ranging device

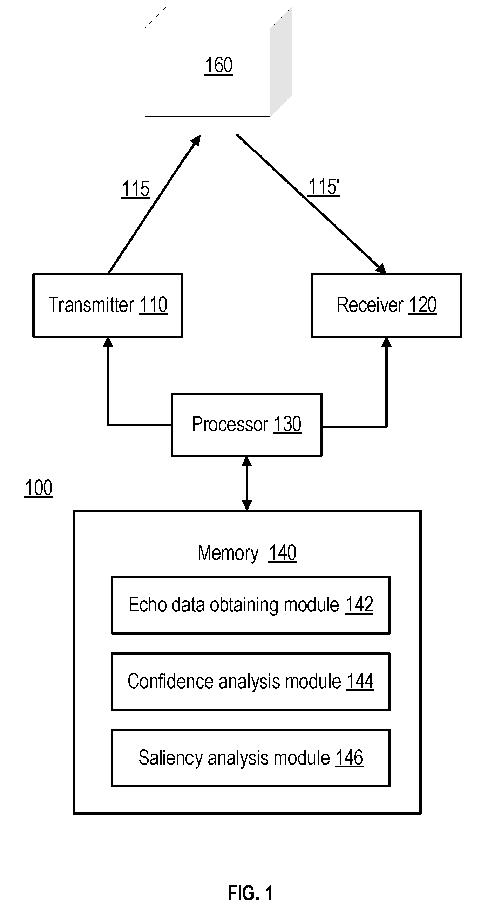

FIG. 1 illustrates an example of a light detection and ranging device and its operations according to an embodiment of the present disclosure.

In the example of FIG. 1, the light detection and ranging device 100 may include a transmitter 110, a receiver 120, a processor 130, and a memory 140. The light detection and ranging device 100 may be configured to detect and measure distances to objects in a surrounding environment by transmitting and receiving light signals, and may even perform 3D modeling. For example, the transmitter 110 may be configured to emit a light signal 115 through a light source. The emitted light signal 115 propagates through a medium to reach a target object 160 in the environment and is reflected from the object 160. The reflected light signal 115' propagates through the medium back to the light detection and ranging device 100 and is received by the receiver 120. In an embodiment, the transmitter 110 and the receiver 120 may each include an optical lens (not shown). The receiver 120 may include a detector for detecting the received light signal 115'. In an embodiment, the light source is configured to emit a laser signal, with the laser having pulses of a plurality of specific sequences. In this way, the light detection and ranging device 100 acts as a Light Detection and Ranging (LiDAR) device.

In the example, the processor 130 may be configured to couple to the transmitter 110, the receiver 120, and the memory 140. The processor 130 may execute one or more modules and/or processings to enable the light detection and ranging device 100 to perform various functions. The functions include controlling the transmission and reception of light signals (for example, laser signals) and various functions described below. For example, the processor 130 may be configured to perform various functions by reading and executing computer programs, code, or executable instructions stored in the memory 140. In some embodiments, the processor 130 may include a microprocessor, a microcontroller, a digital signal processor, a central processing unit (CPU), a graphics processing unit (GPU), and the like.

The memory 140 may be a non-transitory computer-readable storage medium, including but not limited to an electronic storage device, a magnetic storage device, an optical storage device, an electromagnetic storage device, a semiconductor storage device, or any appropriate combination thereof. A non-exhaustive list of more specific examples of computer-readable storage media includes: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding device, and any appropriate combination of the foregoing.

Only one target object 160 is shown in FIG. 1. The target object may be any type of detection object, including but not limited to trees, furniture, roadblocks, vehicles, pedestrians, workpieces, and the like. In actual cases, a plurality of objects of various types are typically present in the environment, rendering detection and ranging of target objects and 3D modeling complex.

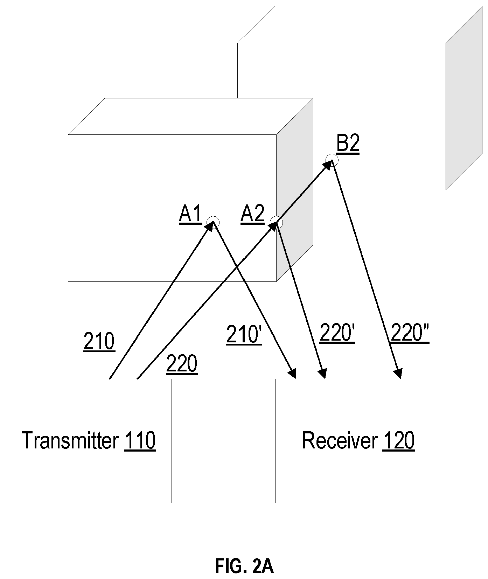

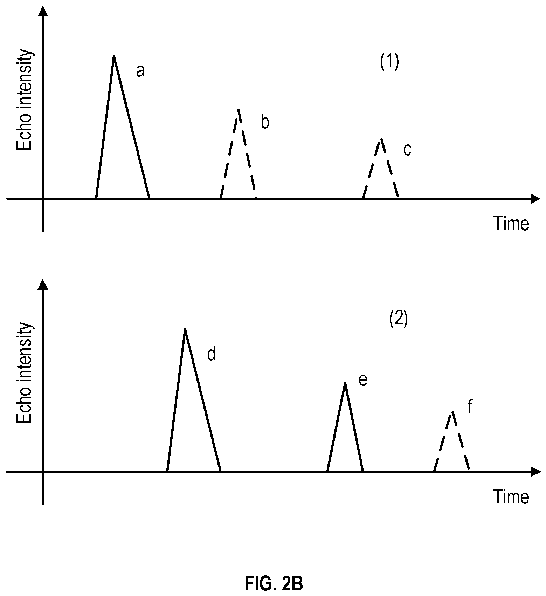

FIG. 2A illustrates a schematic diagram of an application scenario for light detection and ranging according to an embodiment of the present disclosure. Those skilled in the art should understand that the application scenario shown in FIG. 2A is merely an example, and the application scenario for light detection and ranging of the present disclosure is not limited thereto. FIG. 2B illustrates a schematic diagram of echo data obtained in the application scenario of FIG. 2A according to an embodiment of the present disclosure. The example application scenario is described below in conjunction with the light detection and ranging device 100 in FIG. 1.

As shown in FIG. 2A, in the light detection and ranging scheme, the transmitter 110 is configured to emit light signals 210 and 220. The light signal 210 propagates through a medium to reach the surface of an object ahead and is reflected from the object. The reflected light signal 210' propagates through the medium back to the light detection and ranging device 100 and is received by the receiver 120. The light signal 220 propagates through a medium to reach an edge of the object ahead. Then, a portion of the light signal 220 is reflected from the edge of the object ahead, and the reflected light signal 220' returns to the light detection and ranging device 100 and is received by the receiver 120. Another portion of the light signal 220 continues to propagate through the medium to reach a rear object and is reflected from the surface of the object. The reflected light signal 220" returns to the light detection and ranging device 100 and is received by the receiver 120. The receiver 120 may be configured to record the number of photons received at different times, so as to generate echo data.

The light detection and ranging device 100 may have a plurality of pixel points corresponding to objects in the field of view. Here, the meaning of a pixel point is similar to that of a pixel in image sensing, but data recorded for the pixel point is the number of received photons (that is, echo data) rather than RGB color components. Each pixel point may correspond to one or more echo data. In the example of FIG. 2A, the light signal 210 is received by the receiver 120 after striking a point A1 on the object ahead, so as to generate one echo data for a corresponding pixel point. In the example, the pixel point corresponding to the point A1 on the object ahead may be represented as the pixel point A1. The light signal 220 is received by the receiver 120 after striking a point A2 on the object ahead and a point B2 on the rear object, so as to generate two echo data for the corresponding pixel point. In the example, a pixel point corresponding to the point A2 on the object ahead and the point B2 on the rear object may be represented as a pixel point A2/B2.

Pixel points may be in one-to-one correspondence to the field of view angles of the light detection and ranging device 100, and thus may be represented and distinguished by the field of view angle. In addition, the density of pixel points may reflect the angular resolution of the light detection and ranging device 100. For ease of illustration, FIG. 2A shows only two pixel points A1 and A2/B2 generated by the light detection and ranging device 100. In one or more embodiments, depending on the configuration of the light detection and ranging device 100, a greater number of pixel points may be generated.

In FIG. 2A, only the light signals emitted by the transmitter 110 and real object echoes are shown. In the present disclosure, real object echoes are referred to as valid echoes. However, in general cases, the receiver 120 also receives light signals caused by propagation of ambient light (for example, sunlight). Relative to real object echoes, these light signals constitute noise echoes. Noise echoes interfere with the detection of valid echoes, thereby affecting the detection accuracy of valid echoes and even leading to failure in detecting valid echoes.

In FIG. 2B, examples (1) and (2) illustrate multiple echo data corresponding to two pixel points A1 and A2/B2, respectively. In the example of FIG. 2B, the horizontal axis represents time and thus can indicate the flight time of the echo. The vertical axis represents the number of received photons and thus can indicate the echo intensity. In the example, there may also be some lower peaks. Because these lower peaks do not satisfy the determination criteria for echoes (for example, intensity and duration conditions), they may be disregarded.

Referring to example (1), echo data a corresponds to the light signal reflected from the point A1 of the object ahead and thus is a valid echo. Echo data b and c both correspond to noise echoes. Referring to example (2), echo data d corresponds to the light signal reflected from the point A2 of the object ahead, and echo data e corresponds to the light signal reflected from the point B2 of the rear object, and thus both are valid echoes. Echo data f corresponds to a noise echo.

It should be understood that in cases where the peak is higher, a noise echo may be mistakenly identified as a valid echo, thereby interfering with detection of valid echoes. In examples (1) and (2), the noise echo b, c, or f may affect the detection accuracy of corresponding valid echoes. This is significantly disadvantageous for detection and ranging of target objects and 3D modeling. It should be further understood that multiple valid echoes of a single pixel point can convey more information useful. For example, the multiple valid echoes may correspond to multiple target objects. Therefore, detecting and excluding noise echoes for a single pixel point, and/or detecting and identifying multiple valid echoes, may be advantageous for detection and ranging of target objects and the surrounding environment, as well as 3D modeling.

In embodiments of the present disclosure, a confidence score is obtained for echo data of each pixel point in the depth map to evaluate whether the echo data is a noise echo. Based on this evaluation, noise echoes of the pixel point can be excluded, retaining only valid echoes. On one hand, this can reduce interference of noise echoes on valid echoes and improve detection performance. On the other hand, this can reduce the demand for computing and storage resources caused by processing and storing noise echoes at the pixel point level.

In embodiments of the present disclosure, a saliency score is formed for each pixel point or pixel point set in the depth map to evaluate the amount of valid information (for example, the number of valid echoes) of the pixel point or pixel point set. Based on this evaluation, echo data of pixel points or pixel point sets with high amounts of valid information can be processed preferentially. By reducing the processing of echo data for pixel points with low amounts of valid information, processing resources for echo data or even storage resources can be reduced at the entire depth map level.

Still referring to FIG. 1, according to embodiments of the present disclosure, the memory 140 of the light detection and ranging device 100 may include modules, such as an echo data obtaining module 142, a confidence analysis module 144, and a saliency analysis module 146, to desirably improve the performance of the light detection and ranging device 100 in terms of the above and other aspects.

As an example, the echo data obtaining module 142 may be configured to obtain a plurality of echo data, for each pixel point in a depth map of an environment generated by the light detection and ranging device 100. The confidence analysis module 144 may be configured to determine a probability of respective echo data among the plurality of echo data corresponding to a valid echo or a noise echo, thereby forming a confidence map corresponding to the depth map of the environment. The saliency analysis module 146 may be configured to generate a saliency map corresponding to the depth map of the environment based on the confidence map, where the saliency map is used to indicate an amount of valid information in respective portions of the depth map of the environment. Detailed operations of the modules can be understood in conjunction with further descriptions of embodiments of the present disclosure.

In embodiments, the term module is used to denote an example division of executable instructions to facilitate discussion. It should be noted that modules may be divided in different manners, and one or more functions may be arranged in different manners (for example, being combined into a smaller number of modules, or being divided into a larger number of modules). Additionally, the functions and modules described herein may be implemented entirely or partially by software and/or firmware executable on a processor, or may be implemented entirely or partially by hardware (for example, dedicated processing circuits).

### Example of multi-echo data processing

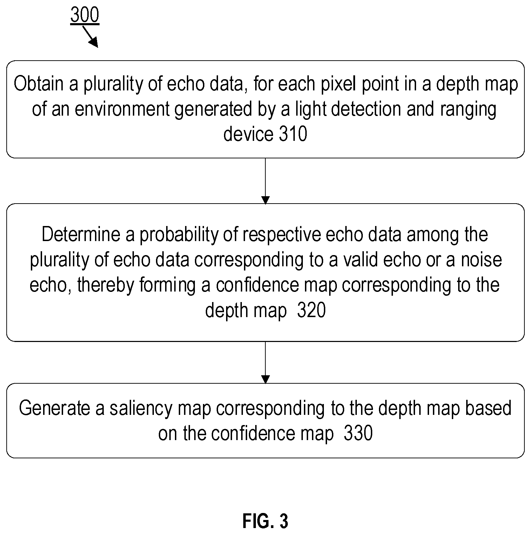

FIG. 3 illustrates an example method for processing multi-echo data according to an embodiment of the present disclosure. The example method 300 may be performed by various light detection and ranging devices, and example operations of the method 300 are described below in conjunction with the light detection and ranging device 100.

As shown in FIG. 3, the method 300 may include obtaining a plurality of echo data, for each pixel point in a depth map of an environment generated by the light detection and ranging device 100

(310). The pixel point is, for example, a pixel point A2/B2 in FIG. 2A, and the multiple echo data includes, for example, echo data d, e, and f. In general, the obtained echo data is echo data that satisfies specific determination criteria. For example, the determination criteria may require that the intensity of the echo is higher than a first predetermined threshold, and/or the duration of the echo is longer than a second predetermined threshold. It should be understood that any number of echo data may be obtained for a single pixel point, such as 4, 5, 6, or more. In one or more embodiments, the echo data may include information such as an echo start position, an echo peak position, an echo end position, and a light intensity of the corresponding echo data.

Correspondingly, the method 300 may include determining a probability of respective echo data among the plurality of echo data corresponding to a valid echo or a noise echo, thereby forming a confidence map corresponding to multiple pixel points in the depth map (320). Further, the echo data may include a probability of respective echo data corresponding to a valid echo or a noise echo, or may include a label indicating whether respective echo data is a valid echo or a noise echo. As described above, for the light detection and ranging device, light signals caused by propagation of ambient light (for example, sunlight) may constitute noise echoes. Noise echoes interfere with the detection of valid echoes, thereby affecting the detection accuracy of valid echoes and even leading to failure in detecting valid echoes. In the example of FIG. 2B, a difference of peaks for a noise echo b relative to a valid echo a, or for a noise echo f relative to valid echo e, may not always be sufficient to select the noise echo. Correspondingly, it is desired to effectively distinguish between a valid echo and a noise echo. In one or more embodiments, a neural network model may be used to distinguish between the valid echo and the noise echo. For example, distinguishing between the valid echo and the noise echo by using the neural network model may include using a unified neural network model for multiple pixel points in the depth map to distinguish between the valid echo and the noise echo. Alternatively, in one or more embodiments, a pixel point-specific noise probability model may be used to distinguish between the valid echo and the noise echo. For example, distinguishing between the valid echo and the noise echo by using the noise probability model may include, for multiple pixel points in the depth map, distinguishing between the valid echo and the noise echo by using multiple pixel-point-specific noise probability models.

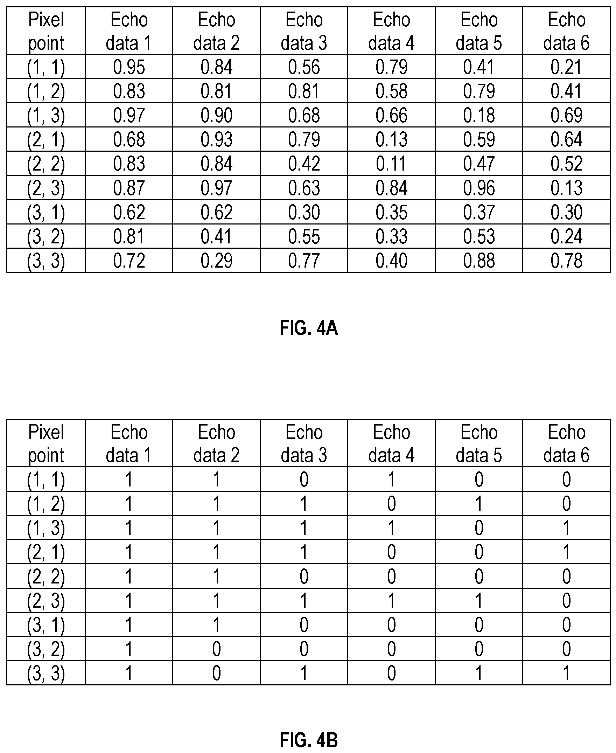

In embodiments, the confidence map may be used to represent probabilities or labels that multiple echo data of each pixel point respectively correspond to valid echoes or noise echoes. FIG. 4A and FIG. 4B illustrate examples of confidence maps corresponding to a depth map of an environment according to an embodiment of the present disclosure. In this example, it is assumed that the light detection and ranging device 100 has a 3-row by 3-column pixel point configuration. Correspondingly, the depth map may have 9 pixel points in total in 3 rows by 3 columns. In this example, each row corresponds to different pixel points. Pixel point (1,1) corresponds to a pixel point in the first row and first column, and so on. A column corresponds to multiple (for example, 6) echo data. A cell at the intersection of a row and a column corresponds to a single echo data detected at a corresponding pixel point. It is to be understood that the above pixel point configuration and the number of echo data are merely examples. In one or more embodiments, a higher or lower pixel point configuration may be provided. The number of echo data for each pixel point may also be more or less, and the number of echo data between multiple pixel points may not necessarily be the same.

In the example of FIG. 4A, a probability in the cell at the intersection of rows and columns indicates the likelihood that a single echo data at a corresponding pixel point corresponds to a valid echo or a noise echo. As shown in FIG. 4A, a probability that echo data 1 at pixel point (1,1) corresponds to a valid echo is 0.95 (or the probability that it corresponds to a noise echo is 0.05). A probability that echo data 6 detected at pixel point (2,3) corresponds to a valid echo is 0.13 (or the probability that it corresponds to a noise echo is 0.87). In one or more embodiments, one or more confidence thresholds may be preset, such that echo data whose probability of corresponding to a valid echo is higher than a corresponding confidence threshold is determined as a valid echo.

In the example of FIG. 4B, a label in a cell at the intersection of a row and a column represents whether a single echo data at a corresponding pixel point corresponds to a valid echo or a noise echo. The example of FIG. 4B is based on the probability information in FIG. 4A and a confidence threshold of 0.6. Correspondingly, echo data 1 detected at pixel point (1,1) has a label indicating a valid echo (i.e., 1). Echo data 6 detected at pixel point (2,3) has a label indicating a noise echo (i.e., 0).

It should be understood that generating multiple echo data based on a single pixel point in the depth map may multiply the amount of data, thereby requiring more resources for storage and processing. The increased resource demand will be more pronounced when there are a large number of pixel points. In one or more embodiments, the demand for storage and processing resources due to multi-echo data is controlled to an appropriate level by excluding noise echoes for a single pixel point. For example, echo data 3, 5, and 6 of pixel point (1,1) may be excluded.

As shown in FIG. 3, the method 300 may further include generating a saliency map corresponding to the depth map based on the confidence map (330). The saliency map is used to indicate a saliency score of a corresponding pixel point or pixel point set of the depth map of the environment. The saliency score is used to indicate an amount of valid information of the corresponding pixel point or pixel point set. In an embodiment, the amount of valid information may indicate the number of valid echoes or a proportion of valid echoes to all obtained echoes.

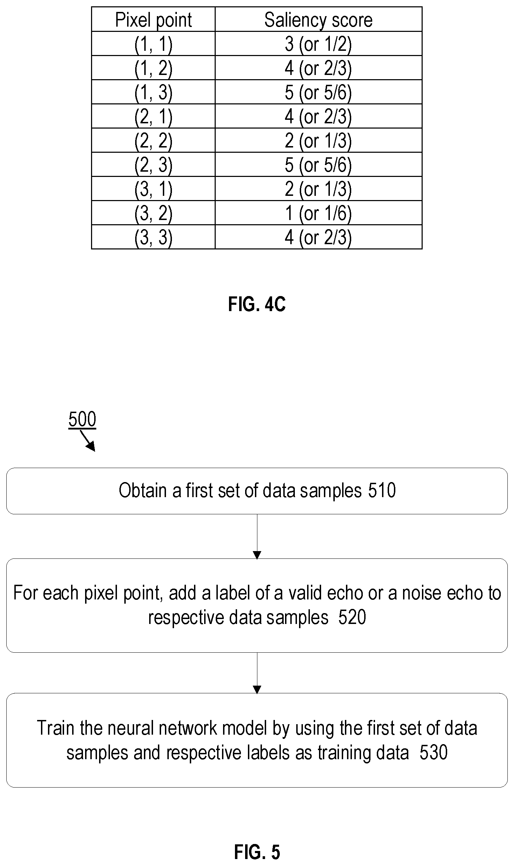

FIG. 4C illustrates an example of a saliency map corresponding to a depth map of an environment according to an embodiment of the present disclosure. This example is based on the same pixel points of the depth map as FIGs. 4A and 4B, that is, 9 pixel points in 3 rows by 3 columns. Each pixel point corresponds to 6 echo data. In the example, among 6 echo data of pixel point (1,1), there are 3 valid echoes, and its saliency score is 3 or 1/2. Among 6 echo data of pixel point (2,3), there are 5 valid echoes, and its saliency score is 5 or 5/6.

It should be understood that a larger saliency score indicates a larger amount of corresponding valid information. Therefore, echo data of a pixel point or pixel point set with a high amount of valid information can be processed preferentially. For example, in terms of allocating storage and processing resources, a higher priority may be assigned to a pixel point or pixel point set with a higher amount of valid information, and a priority of a pixel point or pixel point set with a lower saliency score can be reduced. In this way, the demand for processing resources or even storage resources for echo data can be controlled at an appropriate level at the entire depth map level. For example, assuming a preset threshold of 3, a pixel point higher than or not lower than this threshold can be processed or stored preferentially. FIG. 4C, there are 6 such pixel points, accounting for 2/3 of the total. Processing or even storage resources for the remaining 1/3 of pixel points can be saved.

In an embodiment, the echo data obtained by the light detection and ranging device 100 may be used for data fusion with data obtained by other sensors. For example, in the autonomous driving application, data from LiDAR and data from cameras are generally fused to compensate for shortcomings of the two types of sensors and improve the accuracy and quality of such application. Based on the saliency score of a single pixel point or the entire saliency map, only valid echoes of pixel points whose saliency score is higher than a specific threshold participate in data fusion. This can be advantageous for reducing the computing resource demand of data fusion.

In an embodiment, the saliency map can be output in real time based on a region of interest of a user. For example, a user can determine his/her own region of interest based on a specific application scenario. For an indoor scenario, the region of interest may be a cube with a side length of 3 meters. For an outdoor scenario, the region of interest may be a cube with a side length of 10 meters. After selection of the region of interest, inside the light detection and ranging device 100, a saliency map within the region of interest is output in real time based on the global confidence map and multiple echo data. Then, storage and processing of multi-echo data can be performed based on the saliency map within the region of interest output in real time.

### Example of neural network model training

In embodiments of the present disclosure, a neural network model may be used to distinguish between the valid echo and the noise echo. In a case where the performance of the neural network model is guaranteed through training, valid echoes and noise echoes can be distinguished quickly and accurately, achieving real-time and accurate operations. FIG. 5 illustrates an example method for training a neural network model according to an embodiment of the present disclosure. The example method 500 may be performed by any computer or electronic device.

As shown in FIG. 5, the method 500 may include obtaining a first set of data samples (510). The first set of data samples includes a plurality of echo data for each pixel point in depth maps generated by a plurality of light detection and ranging devices. In one or more embodiments, the first set of data samples is obtained during multiple frames. Continuous dynamic data of multiple frames can enhance diversity of the data samples.

As shown in FIG. 5, the method 500 may include, for each pixel point, adding a label of a valid echo or a noise echo to respective data samples by using a noise probability model (520). Because the propagation environment of light signals for each pixel point and the characteristics of the surface of the object being struck are independent of each other, in one or more embodiments, the noise probability model in use is pixel point-specific. In this way, the accuracy of labels added to the data samples can be improved.

As shown in FIG. 5, the method 500 may further include training the neural network model by using the first set of data samples and respective labels as training data (530). Specifically, multi-echo data of each pixel point can be used as input to the neural network model, and the output of the neural network model is compared with the labels of the data samples. Based on the comparison result, the parameters and structure of the neural network model can be adjusted to implement training of the neural network model.

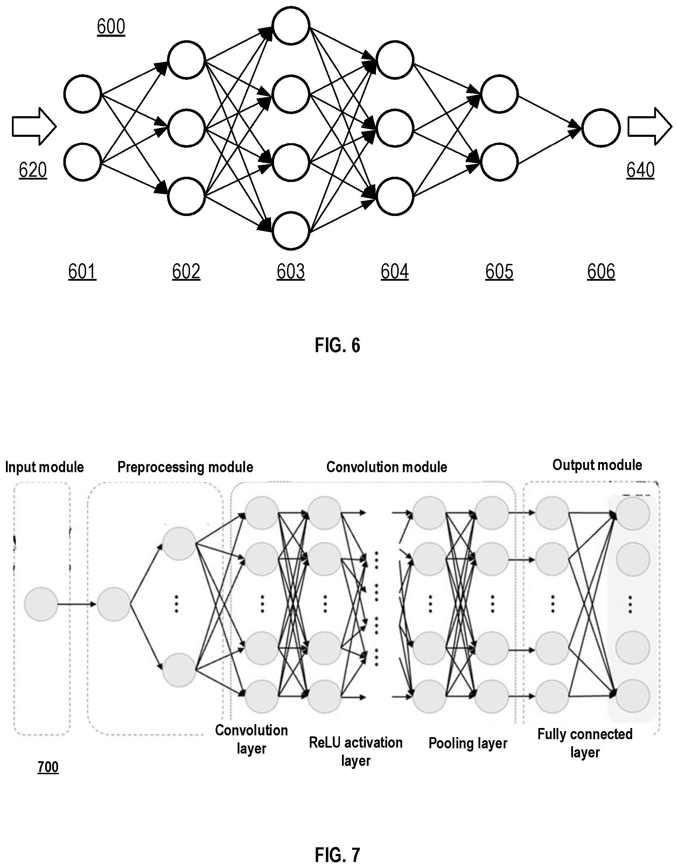

FIG. 6 illustrates an example of a neural network model according to an embodiment of the present disclosure. As shown in FIG. 6, the neural network model 600 includes a plurality of layers, including an input layer 601, an output layer 606, and intermediate layers (or hidden layers) 602 to 605. Each layer has a specific number of neurons, each neuron has a specific weight, and there is a connection between neurons of different layers. When input values 620 are input to the neural network model 600, the neurons at the input layer 601 first receive the corresponding values and propagate the corresponding values to the neurons of the intermediate layer 602 through connections with the neurons of the next layer. The neurons of the intermediate layer 602 calculate a weighted sum of output values of the neurons of the previous layer and output the weighted sum to the neurons of the next intermediate layer 603 through connections with the neurons of the next layer. This proceeds until the neurons of the output layer 606 calculate a weighted sum of output values of the neurons of the previous layer and outputs an inference result 640 for the input values 620.

In the example of FIG. 6, the neural network model 600 has four intermediate layers 602 to 605. Depending on application requirements, the number of intermediate layers may be arbitrary, which is not limited in the present disclosure. In a case where the number of intermediate layers exceeds a specific quantity, the neural network model is also referred to as a deep neural network model. The neural network model 600 is composed of a series of fully connected layers (that is, all outputs are connected to all inputs) and is referred to as a multilayer perceptron (MLP) model. As a further example, the neural network model further includes a convolutional neural network (CNN), a cyclic neural network (RNN) model, and the like. FIG. 7 illustrates an example of a convolutional neural network model (CNN) according to an embodiment of the present disclosure. As shown in FIG. 7, the CNN model 700 is divided into four modules, namely an input module, a preprocessing module, a convolution module, and an output module.

In one or more embodiments, a unified neural network model can be trained based on data samples in a variety of diverse environments. In this way, for pixel points of different depth maps or different pixel points in the same depth map, a unified neural network model can be used to distinguish between valid echoes and noise echoes. This can simplify the processing for distinguishing valid echoes and noise echoes.

In one or more embodiments, the first set of data samples may be obtained by using a real light detection and ranging device and a simulation model. That is, the first set of data samples may include real data and simulated data obtained by the real devices and the simulation models for one or more environments. For example, during multiple frames, a real device or a simulation model may be used continuously at a same position to generate multi-echo data for each pixel point. In simulation, device and object positions or environmental settings can be adjusted to obtain more diverse data samples.

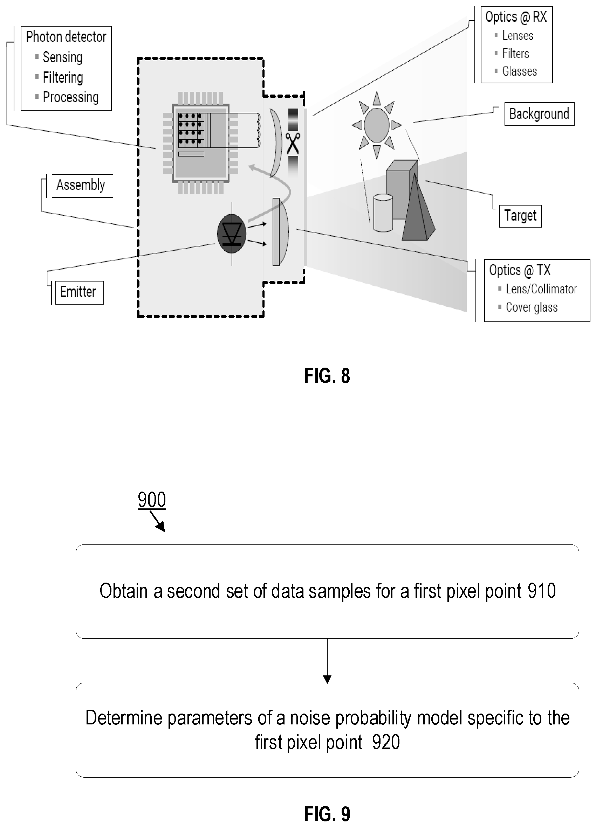

FIG. 8 illustrates an example of a simulation model for light detection and ranging according to an embodiment of the present disclosure. This example simulation model may be established using a tool such as Matlab, Python, Unreal Engine, or Autoware.

As shown in FIG. 8, the following physical entities of components need to be simulated: 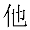 the transmitter, the light emitting device, the photon detector, and the light receiving device. The light emitting device includes a lens and cover glass. The photon detector includes sensing, filtering, and processing units. The light receiving device includes a lens, a filter, and glass. A background environment, a target object, and other objects also need to be simulated. The background environment includes light noise. Different ambient light conditions can be simulated by controlling the strength of the light noise.

Through simulation of the light signal emission, propagation, and reception stages of the light detection and ranging scheme, a sufficient number of diverse data samples can be obtained. This helps resolve the problem that real data samples may be insufficient or obtaining a sufficient number of diverse data samples may be time-consuming. In addition, the first set of data samples still includes real data samples, so that training of the neural network model can still reflect the real environment.

In an embodiment, the neural network model may be trained offline, and the trained neural network model may be stored locally in the light detection and ranging device 100 for use.

### Example of establishing noise probability model

As described above, in embodiments of the present disclosure, a pixel point-specific noise probability model may be used to distinguish between valid echoes and noise echoes of respective pixel points. During training of the neural network model, labels of valid echoes or noise echoes may be added to corresponding data samples based on the distinction result. FIG. 9 illustrates an example method for establishing a noise probability model according to an embodiment of the present disclosure. Because the propagation environment of light signals for each pixel point and the characteristics of the surface of the object being struck are independent of each other, a noise probability model may be established for a single pixel point. The example method 900 may be performed by any computer or electronic device.

As shown in FIG. 9, the method 900 may include obtaining a second set of data samples for a first pixel point (910). The second set of data samples includes a plurality of echo data for the first pixel point in a depth map generated by a plurality of light detection and ranging devices. In one or more embodiments, the second set of data samples is obtained during multiple frames. Continuous dynamic data of multiple frames can enhance diversity of the data samples. The method 900 may further include determining parameters of a noise probability model specific to the first pixel point, based on the plurality of echo data for the first pixel point (920).

In one or more embodiments, a real light detection and ranging device and a simulation model may be used to obtain the second set of data samples. That is, the second set of data samples may include real data and simulated data obtained by the real devices and the simulation models for one or more environments. For example, during multiple frames, a real device or a simulation model may be used continuously at a same position to generate multi-echo data for the first pixel point. In simulation, device and object positions or environmental settings can be adjusted to obtain more diverse data samples.

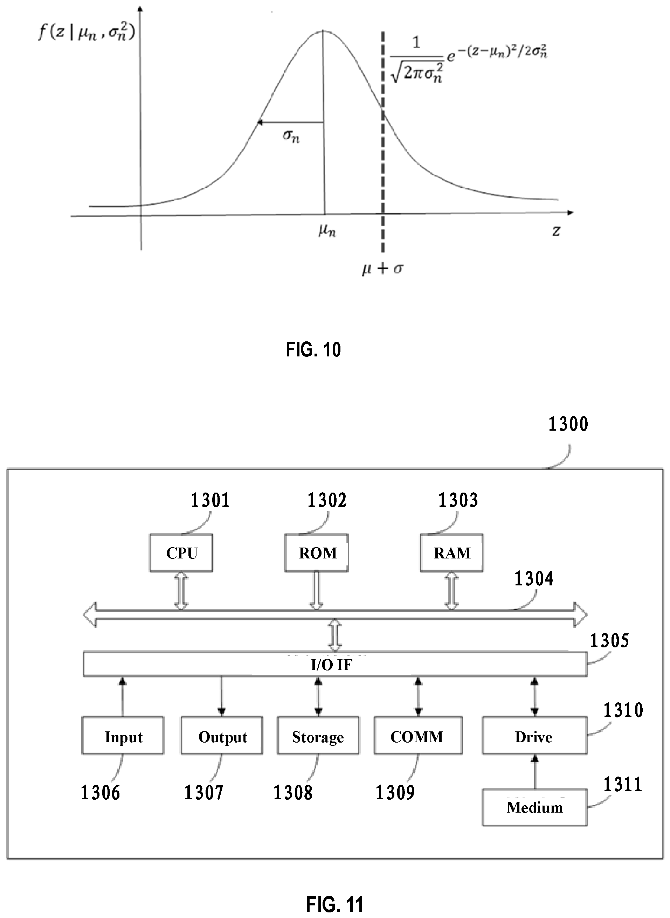

For a specific pixel point, through histogram decomposition, multiple echo data corresponding to the pixel point may be obtained from raw data. A waveform of the echo data may be approximated as a Gaussian waveform with a tail. FIG. 10 illustrates an example of a noise probability model according to an embodiment of the present disclosure. For Gaussian distribution shown in FIG. 10, parameters to be determined include a mean *µ* and a standard deviation *σ*.

In the scheme of establishing a noise probability model based on data samples obtained from real devices, it is assumed that five echo data are obtained from raw data of a single pixel point, and based on empirical assumption, the latter three echo data are noise echoes, or the three echo data with lower peaks are noise echoes. Based on this assumption and based on the data sample [144, 120, 114, 113, 112], the mean of the Gaussian distribution followed by the noise echoes may be determined as 113 (that is, (114+113+112)/3). Further, the standard deviation may be determined based on the following empirical algorithm formula (1). $\begin{matrix}Min std = \sqrt{Max peak - Mean} , \\ If \left(\left(First echo-Mean\right)>Min std:σ=First echo-Mean,\right. \\ Else : σ = Min std\end{matrix}$ Formula (1)

In formula (1), *Min std* represents the minimum standard deviation, *Max* peakrepresents the maximum peak among multiple echo data, *Mean* represents the mean of peaks of multiple echo data, and *First echo* represents the peak of the first echo data. In one or more embodiments, the mean and standard deviation of the Gaussian distribution may be estimated based on echo data of multiple frames, so as to fit a noise probability model for a specific pixel point.

In one or more embodiments, using the noise probability model includes determining, based on the noise probability model, whether the obtained multiple echo data is a valid echo or a noise echo. In the above Gaussian distribution example, echo data whose peak is greater than or equal to the sum of the mean and standard deviation of the Gaussian distribution can be determined as a valid echo, and echo data whose peak is less than the sum of the mean and standard deviation can be determined as a noise echo.

It should be noted that due to bandwidth and other conditions of the light detection and ranging device itself, the real device may not be able to output complete raw data, but can output only multiple echo data obtained through histogram decomposition. The noise obtained in this way may be extreme values and cannot represent general situations. Moreover, in the above process of establishing the noise probability model, assumptions are made for noise echoes (that is, the latter three echoes), and determining of the standard deviation is also based more on empirical algorithms. These factors may reduce accuracy of the established noise probability model, and corresponding parameters may be biased parameters. As a supplement or alternative, raw data in a form of histogram for a single pixel point may be obtained through simulation, thereby compensating for the limitation that real devices cannot output complete raw data.

Therefore, in one or more embodiments, the light detection and ranging device may be simulated, and based on a physical model of the simulated light detection and ranging device, raw data in the form of histogram for a single pixel point can be obtained. Then, a set of data samples is obtained by repeated sampling from the histogram, so as to obtain a more accurate noise probability model.

The simulation model shown in FIG. 8 may be used to obtain the set of data samples. As described above, the simulation may involve simulation of the light signal emission, propagation, and reception stages. The following specifically describes simulation examples of the light signal emission and propagation stages. Those skilled in the art can understand that the light signal reception stage can be simulated based on specific principles and parameters of different types of receiving devices (for example, PD, APD, or SAPD).

In the example simulation, the illuminance caused by the signal light can be calculated based on formula (2): ${E}_{img , sig} \left[W/{m}^{2}\right] \approx \frac{{P}_{t}}{{R}^{2} {Ω}_{TX}} \times \frac{ρ}{Π} \times \frac{Π}{4 {F}^{2}} \times {η}_{RX}$ (2) where $\frac{{P}_{t}}{{R}^{2} {Ω}_{TX}} , \frac{ρ}{Π}$, and $\frac{Π}{4 {F}^{2}}$ sequentially represent an object illuminance caused by the signal light, an object reflection parameter, and a lens parameter.

The illuminance caused by the ambient light is calculated based on formula (3): ${E}_{img , amb} \left[W/{m}^{2}\right] \approx {E}_{obj , amb} \times \frac{ρ}{Π} \times \frac{Π}{4 {F}^{2}} \times {η}_{RX}$ (3)
where *E_{obj,amp}* represents the object illuminance caused by the ambient light. The meanings of other parameters are as follows:
*Pₜ*: light power; *Ω_{TX}*: light projection angle; *ρ:* object reflectivity; F: F value of the lens; *η_{RX}*: light system power; and R: distance to the object.

A count rate caused by the signal light, namely, the number of photons caused by the signal light detected by the detector per unit time, can be calculated based on formula (4). ${CR}_{sig} \left[cps\right] = {E}_{img , sig} \times \frac{{A}_{pix}}{\frac{hc}{λ}} \times PDE = \frac{{P}_{t}}{{R}^{2} {Ω}_{TX}} \times \frac{ρ}{Π} \frac{Π}{4 {F}^{2}} \times {η}_{RX} \times \frac{{A}_{pix}}{\frac{hc}{λ}} \times PDE$ (4)

A count rate caused by the ambient light, namely, the number of photons caused by the ambient light detected by the detector per unit time, can be calculated based on formula (5). ${CR}_{amb} \left[cps\right] = {E}_{img , amb} \times \frac{{A}_{pix}}{\frac{hc}{λ}} \times PDE = {E}_{obj , amb} \times \frac{ρ}{Π} \frac{Π}{4 {F}^{2}} \times {η}_{RX} \times \frac{{A}_{pix}}{\frac{hc}{λ}} \times PDE$ (5)
where the meanings of parameters are as follows:
*Aₚᵢₓ*: pixel area; *h:* Planck's constant; c: speed of light; *λ*: light wavelength; and *PDE:* photon detection efficiency.

A probability of detecting at least one photon in a time segment (bin) can be calculated based on formula (6). ${p}_{high} = 1 - {e}^{- \left({CR}_{sig}+{CR}_{amb}\right) \times {T}_{bin}}$ (6)
where the meanings of parameters are as follows:
*CR_{sig}:* ideal count rate of signal light; *CR_{amb}:* ideal count rate of ambient light; and *T_{bin}*: time slot of one segment of the histogram.

*p_{high}* follows a Poisson distribution, representing a probability that a single detection diode is triggered within a time segment each time it is illuminated. Assuming repeated illumination *N* times, a case where the detection diode is triggered follows a binomial distribution. Formulas (7) and (8) respectively represent the number of times the detection diode is triggered due to both signal light and ambient light and the number of times triggered due to ambient light (namely, noise). ${N}_{peak} = N \times \left(1-{e}^{- \left({CR}_{sig}+{CR}_{amb}\right) \times {T}_{bin}}\right)$ (7) ${N}_{amb} = N \times \left(1-{e}^{- \left({CR}_{amb}\right) \times {T}_{bin}}\right)$ (8)

Through the above process, raw echo data including noise for a single pixel point can be obtained. Then, the mean and variance of the Gaussian distribution can be determined based on the echo data. Examples of parameter values set in the simulation are as follows:

| Component category 1 | Component category 2 | Parameter | Simulation example 1 | Simulation example 2 |
|---|---|---|---|---|
| | Laser | Pulse width | 4 | 4 |
| | | Peak power | 400 | 400 |
| | | Wavelength | 915 | 915 |
| | | Number of illuminations per slot | 16 | 16 |
| Light emiting section | | Illumination interval | 3 | 3 |
| | Optical system | Projection efficiency | 71.1 | 71.1 |
| | | FOV_H | 0.1 | 0.1 |
| | | FOV_V | 25.5 | 25.5 |
| | | Angular resolution_H | 0.1 | 0.1 |
| | | Angular resolution_V | 12.75 | 12.75 |
| | | LD division | 2 | 2 |
| Light receiving section | Optical system | Focal length | 12.94 | 12.94 |
| | | Lens diameter | 12.3 | 12.3 |
| | | Lens F value | 1.05 | 1.05 |
| | | Reception efficiency | 90 | 90 |
| | Bandpass filter | Wavelength width | 25 | 25 |
| | | SPAD array H×V | 6×6 | 6×6 |
| | | Angle per macro pixel_H | 0.266 | 0.266 |
| | | Angle per macro pixel_V | 0.266 | 0.266 |
| Ambient light | | Illuminance | 6300 | 6300 |
| Object | | Object reflectivity | 50 | 90 |

In an embodiment, the noise probability model may be established offline, and the established noise probability model may be stored locally in the light detection and ranging device 100 for use.

An embodiment of the present disclosure further provides an electronic device. The electronic device includes one or more processors and one or more memories storing one or more instructions thereon. When executed by the one or more processors, the one or more instructions cause the one or more processors to perform the method for processing multi-echo data, the method for training a neural network model, or the method for establishing a noise probability model according to embodiments of the present disclosure.

An embodiment of the present disclosure further provides a computer-readable storage medium storing one or more instructions thereon. When executed by a processor, the one or more instructions cause the processor to perform the method for processing multi-echo data, the method for training a neural network model, or the method for establishing a noise probability model according to embodiments of the present disclosure.

An embodiment of the present disclosure further provides a computer program product including one or more instructions. When executed by a processor, the one or more instructions cause the processor to perform the method for processing multi-echo data, the method for training a neural network model, or the method for establishing a noise probability model according to embodiments of the present disclosure.•

It should be understood that the instructions in the computer-readable storage medium according to the embodiments of the present disclosure can be configured to perform operations corresponding to the device and method embodiments described above. When referring to the above device and method embodiments, the embodiments of the computer-readable storage medium are clear to those skilled in the art, and therefore description thereof will not be repeated herein. A computer-readable storage medium for carrying or including the above-described instructions also fall within the scope of the present disclosure. Such computer-readable storage medium can include, but is not limited to, a floppy disk, an optical disk, a magneto-optical disk, a memory card, a memory stick, and the like.

Embodiments of the present disclosure further provide various apparatuses including components or units for performing steps of the method for processing multi-echo data, the method for training a neural network model, or the method for establishing a noise probability model in the above embodiments.

It should be noted that the foregoing parts or units are merely logical modules divided based on specific functions implemented by the units and are not intended to limit a specific implementation. For example, they may be implemented in software, hardware, or a combination of software and hardware. In actual implementation, the foregoing parts or units may be implemented as independent physical entities or may be implemented by a single entity (for example, a processor (CPU, DSP, or the like), an integrated circuit or the like). For example, a plurality of functions included in one unit in the above embodiments may be implemented by separate apparatuses. Alternatively, the multiple functions implemented by multiple units in the above embodiments may be implemented by separate apparatuses, respectively. In addition, one of the above functions can be implemented by multiple units.

In addition, it should be understood that the above devicies and series of processing may alternatively be implemented by software and/or firmware. In the case of implementation by software and/or firmware, a program constituting the software is installed from a storage medium or a network to a computer having a dedicated hardware configuration, such as an electronic device 1300 shown in FIG. 11. When various programs are installed, the electronic device is capable of performing various functions and so on. FIG. 11 illustrates an example block diagram of an electronic device for implementing various methods according to embodiments of the present disclosure.

In FIG. 11, a central processing unit (CPU) 1301 executes various processing based on a program stored in a read-only memory (ROM) 1302 or a program loaded from a storage part 1308 to a random access memory (RAM) 1303. The RAM 1303 also stores data required for executing various processing and the like by the CPU 1301 when necessary.

The CPU 1301, the ROM 1302, and the RAM 1303 are connected to each other via a bus 1304. An input/output interface 1305 is also connected to the bus 1304.

The following components are connected to the input/output interface 1305: an input part 1306, including a keyboard, a mouse, and the like; an output part 1307, including a display such as a cathode-ray tube (CRT) and a liquid crystal display (LCD), a speaker, and the like; a storage part 1308, including a hard disk and the like; and a communication part 1309, including a network interface card such as a LAN card or a modem. The communication part 1309 performs communication processing via a network such as the Internet.

Based on needs, a drive 1310 is also connected to the input/output interface 1305. A removable medium 1311 such as a magnetic disk, an optical disc, a magneto-optical disk, a semiconductor memory, or the like is mounted on the drive 1310 when necessary, so that a computer program read therefrom is installed in the storage part 1308 when necessary.

In a case that the foregoing series of processing are implemented by software, programs constituting the software are installed from a network such as the Internet or a storage medium such as the removable medium 1311.

Those skilled in the art should understand that such a storage medium is not limited to the removable medium 1311 shown in FIG. 11, in which the program is stored and distributed independent from a device to provide the program for users. For example, the removable medium 1311 includes a magnetic disk (including a floppy disk (registered trademark)), an optical disc (including a compact disk read-only memory (CD-ROM) and a digital versatile disk (DVD)), a magneto-optical disc (including a mini disk (MD) (registered trademark)), and a semiconductor memory. Alternatively, the storage medium may be the ROM 1302, a hard disk included in the storage part 1308, or the like, in which the program is stored, and may be distributed to users along with a device including the storage medium.

It should be understood that the technical solutions of the present disclosure may be implemented as the following embodiments.
1. A method for processing multi-echo data, including:
   obtaining a plurality of echo data, for each pixel point in a depth map of an environment generated by a light detection and ranging device;
   determining a probability of respective echo data among the plurality of echo data corresponding to a valid echo or a noise echo, thereby forming a confidence map corresponding to the depth map of the environment; and
   generating a saliency map corresponding to the depth map of the environment based on the confidence map, where the saliency map is used to indicate an amount of valid information in respective portions of the depth map of the environment.
2. The method according to item 1, where determining the probability of the respective echo data among the plurality of echo data corresponding to the valid echo or the noise echo includes using a neural network model to distinguish between the valid echo and the noise echo.
3. The method according to item 2, where using the neural network model to distinguish between the valid echo and the noise echo includes: using a unified neural network model for different pixel points in the depth map to distinguish between the valid echo and the noise echo.
4. The method according to item 1, where the neural network model is trained by:
   obtaining a first set of data samples, where the first set of data samples includes a plurality of echo data for each pixel point in depth maps generated by a plurality of light detection and ranging devices;
   for each pixel point, using a pixel point-specific noise probability model to add a label of a valid echo or a noise echo to respective data samples; and
   using the first set of data samples and respective labels as training data to train the neural network model.
5. The method according to item 4,
   where the plurality of light detection and ranging devices include real devices and simulation models, and the first set of data samples includes real data and simulated data obtained by the real devices and the simulation models for one or more environments, and
   where the first set of data samples is obtained during a first plurality of frames.
6. The method according to item 4, where parameters of the pixel point-specific noise probability model are determined by:
   obtaining a second set of data samples, where the second set of data samples includes a plurality of echo data for a first pixel point in a depth map generated by a plurality of light detection and ranging devices; and
   determining parameters of a noise probability model specific to the first pixel point, based on the plurality of echo data for the first pixel point.
7. The method according to item 6,
   where the plurality of light detection and ranging devices include real devices and simulation models, and the second set of data samples includes real data and simulated data obtained by the real devices and the simulation models for one or more environments, and
   where the second set of data samples is obtained during a second plurality of frames.
8. The method according to item 1, where determining the probability of the respective echo data among the plurality of echo data corresponding to the valid echo or the noise echo includes distinguishing between the valid echo and the noise echo using a pixel point-specific noise probability model.
9. The method according to item 1, further comprising:
   prioritizing echo data for a portion of the depth map of the environment with a high amount of valid information, based on the saliency map; and/or
   outputting the saliency map in real time based on a user's region of interest.
10. The method according to item 1, where the neural network model is a convolutional neural network model, and/or where the light detection and ranging device includes a LiDAR.
11. A method for training a neural network model, including:
   obtaining a set of data samples, where the set of data samples includes a plurality of echo data for each pixel point in depth maps generated by a plurality of light detection and ranging devices;
   for each pixel point, adding a label of a valid echo or a noise echo to respective data samples by using a pixel point-specific noise probability model; and
   training the neural network model by using the set of data samples and respective labels as training data.
12. The method according to item 11,
   where the plurality of light detection and ranging devices include real devices and simulation models, and the set of data samples includes real data and simulated data obtained by the real devices and the simulation models for one or more environments, and
   where the set of data samples is obtained during a plurality of frames.
13. The method according to item 11, where the neural network model is a convolutional neural network model, and/or where the light detection and ranging device includes a LiDAR.
14. A method for establishing a noise probability model, including:
   obtaining a set of data samples, where the set of data samples includes a plurality of echo data for a first pixel point in depth maps generated by a plurality of light detection and ranging devices; and
   determining parameters of a noise probability model specific to the first pixel point, based on the plurality of echo data for the first pixel point.
15. The method according to item 14,
   where the plurality of light detection and ranging devices include real devices and simulation models, and the set of data samples includes real data and simulated data obtained by the real devices and the simulation models for one or more environments, and
   where the set of data samples is obtained during a plurality of frames.
16. The method according to item 14, where the noise probability model satisfies a Gaussian distribution, and the parameters include a mean and a variance of the Gaussian distribution.
17. A light detection and ranging device, including:
   at least one processor; and
   at least one memory, including computer program code, where the at least one memory and the computer program code are configured to, with the at least one processor, cause the light detection and ranging device to perform the method according to any one of items 1 to 10.
18. An electronic device, including:
   at least one processor; and
   at least one memory, including computer program code, where the at least one memory and the computer program code are configured to, with the at least one processor, cause the electronic device to perform the method according to any one of items 11 to 13 or 14 to 16.
19. A computer program product, including one or more instructions, where the one or more instructions, when executed by a processor, cause implementation of the method according to any one of items 1 to 10, 11 to 13, or 14 to 16.

The exemple embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, a plurality of functions included in one unit in the above embodiments may be implemented by separate apparatuses. Alternatively, the multiple functions implemented by the multiple units in the above embodiments may be implemented by separate apparuatses, respectively. In addition, one of the above functions can be implemented by multiple units. Needless to say, such a configuration is included in the technical scope of the present disclosure.

In this specification, the steps described in the flowchart include not only processes performed in time series in the described order, but also processes performed in parallel or individually rather than necessarily in time series. In addition, even in the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include" and "comprise", or any of their variants in the embodiments of the present disclosure are intended to cover a non-exclusive inclusion, so that a process, method, article, or device that includes a list of elements not only includes those elements but also includes other elements that are not expressly listed, or further includes elements inherent to such process, method, article, or device. In absence of more constraints, an element preceded by "includes a.." does not preclude existence of other identical elements in the process, method, article, or device that includes the element.

## Claims

1. A method for processing multi-echo data, comprising:
obtaining a plurality of echo data, for each pixel point in a depth map of an environment generated by a light detection and ranging device;
determining a probability of respective echo data among the plurality of echo data corresponding to a valid echo or a noise echo, thereby forming a confidence map corresponding to the depth map of the environment; and
generating a saliency map corresponding to the depth map of the environment based on the confidence map, wherein the saliency map is used to indicate an amount of valid information in respective portions of the depth map of the environment.

2. The method according to claim 1, wherein determining the probability of the respective echo data among the plurality of echo data corresponding to the valid echo or the noise echo comprises using a neural network model to distinguish between the valid echo and the noise echo.

3. The method according to claim 2, wherein using the neural network model to distinguish between the valid echo and the noise echo comprises: using a unified neural network model for different pixel points in the depth map to distinguish between the valid echo and the noise echo.

4. The method according to claim 1, wherein the neural network model is trained by:
obtaining a first set of data samples, wherein the first set of data samples comprises a plurality of echo data for each pixel point in depth maps generated by a plurality of light detection and ranging devices;
for each pixel point, using a pixel point-specific noise probability model to add a label of a valid echo or a noise echo to respective data samples; and
using the first set of data samples and respective labels as training data to train the neural network model.

5. The method according to claim 4,
wherein the plurality of light detection and ranging devices comprise real devices and simulation models, and the first set of data samples comprises real data and simulated data obtained by the real devices and the simulation models for one or more environments, and
wherein the first set of data samples is obtained during a first plurality of frames.

6. The method according to claim 4, wherein parameters of the pixel point-specific noise probability model are determined by:
obtaining a second set of data samples, wherein the second set of data samples comprises a plurality of echo data for a first pixel point in a depth map generated by a plurality of light detection and ranging devices; and
determining parameters of a noise probability model specific to the first pixel point, based on the plurality of echo data for the first pixel point.

7. The method according to claim 6,
wherein the plurality of light detection and ranging devices comprise real devices and simulation models, and the second set of data samples comprises real data and simulated data obtained by the real devices and the simulation models for one or more environments, and
wherein the second set of data samples is obtained during a second plurality of frames.

8. The method according to claim 1, wherein determining the probability of the respective echo data among the plurality of echo data corresponding to the valid echo or the noise echo comprises distinguishing between the valid echo and the noise echo using a pixel point-specific noise probability model.

9. The method according to claim 1, further comprising:
prioritizing echo data for a portion of the depth map of the environment with a high amount of valid information, based on the saliency map; and/or
outputting the saliency map in real time based on a user's region of interest.

10. The method according to claim 1, wherein the neural network model is a convolutional neural network model, and/or wherein the light detection and ranging device comprises a LiDAR.

11. A method for training a neural network model, comprising:
obtaining a set of data samples, wherein the set of data samples comprises a plurality of echo data for each pixel point in depth maps generated by a plurality of light detection and ranging devices;
for each pixel point, adding a label of a valid echo or a noise echo to respective data samples by using a pixel point-specific noise probability model; and
training the neural network model by using the set of data samples and respective labels as training data.

12. The method according to claim 11,
wherein the plurality of light detection and ranging devices comprise real devices and simulation models, and the set of data samples comprises real data and simulated data obtained by the real devices and the simulation models for one or more environments, and
wherein the set of data samples is obtained during a plurality of frames.

13. The method according to claim 11, wherein the neural network model is a convolutional neural network model, and/or wherein the light detection and ranging device comprises a LiDAR.

14. A method for establishing a noise probability model, comprising:
obtaining a set of data samples, wherein the set of data samples comprises a plurality of echo data for a first pixel point in depth maps generated by a plurality of light detection and ranging devices; and
determining parameters of a noise probability model specific to the first pixel point, based on the plurality of echo data for the first pixel point.

15. The method according to claim 14,
wherein the plurality of light detection and ranging devices comprise real devices and simulation models, and the set of data samples comprises real data and simulated data obtained by the real devices and the simulation models for one or more environments, and
wherein the set of data samples is obtained during a plurality of frames.

16. The method according to claim 14, wherein the noise probability model satisfies a Gaussian distribution, and the parameters comprise a mean and a variance of the Gaussian distribution.

17. A light detection and ranging device, comprising:
at least one processor; and
at least one memory, comprising computer program code, wherein the at least one memory and the computer program code are configured to, with the at least one processor, cause the light detection and ranging device to perform the method according to any one of claims 1 to 10.

18. An electronic device, comprising:
at least one processor; and
at least one memory, comprising computer program code, wherein the at least one memory and the computer program code are configured to, with the at least one processor, cause the electronic device to perform the method according to any one of claims 11 to 13 or 14 to 16.

19. A computer program product, comprising one or more instructions which, when executed by a processor, cause implementation of the method according to any one of claims 1 to 10, 11 to 13, or 14 to 16.
